(19) Europäisches Patentamt
European Patent Office
Office européen des brevets

(11) EP 4 109 354 A1

(12) EUROPEAN PATENT APPLICATION

(43) Date of publication:
28.12.2022 Bulletin 2022/52

(51) International Patent Classification (IPC):
G06N 20/00 (2019.01)        G06F 30/27 (2020.01)

(21) Application number: 22175876.6

(52) Cooperative Patent Classification (CPC):
G06N 20/00; G06F 30/27

(22) Date of filing: 27.05.2022

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.06.2021 US 202163195222 P

(71) Applicant: Saferide Technologies Ltd.
6971901 Tel-Aviv (IL)

(72) Inventors:
• APARTSIN, Alexander
7630235 Rehovot (IL)
• STEIN, Yehiel
4700802 Ramat Hasharon (IL)
• VARDI, Yossi
6908637 Tel Aviv (IL)

(74) Representative: Studio Torta S.p.A.
Via Viotti, 9
10121 Torino (IT)

(54) A SYSTEM AND METHOD FOR PHYSICAL MODEL BASED MACHINE LEARNING

(57) A physics-based model machine learning system, the physics-based model machine learning system comprising a processing circuitry (230) configured to: obtain: (a) a training data-set, the training data-set comprising a plurality of training records, each training record including a collection of features describing a given allowed state of a physical entity (310), and (b) one or more physical models, modeling allowed physical patterns associated with the physical entity; enrich the training data-set by determining values of one or more unobservable features for one or more given training records of the training records, wherein the unobservable features are determined utilizing at least one of the physical models and at least one of the features of the respective given training records, giving rise to an enriched training data-set (320); train, using the enriched training data-set (330), a machine learning model capable of receiving one or more inference records, and determining, for each of the inference records, a corresponding normality score being indicative of conformity of the respective inference record with an allowed state of the physical entity; and classify, using the machine learning model, an incoming record describing a state of the physical entity at a given time, as abnormal upon the normality score determined by the machine learning model being below a threshold (340).

Fig. 2

**Description**

**TECHNICAL FIELD**

The invention relates to a system and method for machine learning based on one or more physical models.

**BACKGROUND**

A Cyber-Physical System (CPS) is a computer system in which a mechanism is controlled or monitored by computer-based algorithms. In CPSs, physical and software components are deeply intertwined, able to operate on different spatial and temporal scales, exhibit multiple and distinct behavioral modalities, and interact with each other in ways that change with context. In CPSs there is a link between the computational and physical elements that produces a system that is a combination of interlinked physical and computational elements. Because of their heavy reliance on physical elements, CPSs are constraint by physical and electromechanical laws and by control equations. Examples of CPS are: vehicles, electrical grid systems, medical equipment and more.

Machine learning models can be used to analyze and monitor signals from CPSs in order to achieve various tasks, and specifically for signal integrity monitoring tasks by performing anomaly detection on the signals read from a CPS. A non-limiting example of signal integrity monitoring is a problem in the domain of Vehicle Health Monitoring (VHM). In VHM, abnormal vehicle behavior is detected and diagnosed by detecting anomalies in observed signal (for example: by looking for unusual combination of signals and their temporal behavior). Most current machine learning anomaly detection solutions learn normal behavior of signals from historical records of vehicles and scores anomalies according to the discrepancy between learned patterns and actual behavior. As vehicles are CPSs, at least some of the processes in the vehicle are governed by electrical and physical models. These models can be seen as systems of equations. These models can include one or more unobservable quantities or features (for example: system states or system parameters that are not part of the signals read from the CPS). These unobservable quantities or features can't be accessed by current machine learning models of signals from CPSs, not during training and not during the anomaly detection process, thus current machine learning models utilize only observable features of the CPSs.

Current machine learning models modeling CPSs do not utilize the unobservable features of the CPSs. This produces sub-optimal machine learning models that can only partially model the CPSs. There is thus a need in the art for a new hybrid method and system for physical-model based machine learning.

**GENERAL DESCRIPTION**

In accordance with a first aspect of the presently disclosed subject matter, there is provided a physics-based model machine learning system, the physics-based model machine learning system comprising a processing circuitry configured to: obtain: (a) a training data-set, the training data-set comprising a plurality of training records, each training record including a collection of features describing a given allowed state of a physical entity, and (b) one or more physical models, modeling allowed physical patterns associated with the physical entity; enrich the training data-set by determining values of one or more unobservable features for one or more given training records of the training records, wherein the unobservable features are determined utilizing at least one of the physical models and at least one of the features of the respective given training records, giving rise to an enriched training data-set; train, using the enriched training data-set, a machine learning model capable of receiving one or more inference records, and determining, for each of the inference records, a corresponding normality score being indicative of conformity of the respective inference record with an allowed state of the physical entity; and classify, using the machine learning model, an incoming record describing a state of the physical entity at a given time, as abnormal upon the normality score determined by the machine learning model being below a threshold.

In some cases, the physical models are based on physical laws and control equations associated with the physical entity.

In some cases, the physical entity is a Cyber Physical System (CPS).

In some cases, the physical entity is a vehicle.

In accordance with a second aspect of the presently disclosed subject matter, there is provided a physics-based model machine learning method, the physics-based model machine learning method comprising: obtaining, by a processing circuitry: (a) a training data-set, the training data-set comprising a plurality of training records, each training record including a collection of features describing a given allowed state of a physical entity, and (b) one or more physical models, modeling allowed physical patterns associated with the physical entity; enriching, by the processing circuitry, the training data-set by determining values of one or more unobservable features for one or more given training records of the training records, wherein the unobservable features are determined utilizing at least one of the physical models and at least one of the features of the respective given training records, giving rise to an enriched training data-set;

training, by the processing circuitry, using the enriched training data-set, a machine learning model capable of receiving one or more inference records, and determining, for each of the inference records, a corresponding normality score being indicative of conformity of the respective inference record with an allowed state of the physical entity; and classifying, by the processing circuitry, using the machine learning model, an incoming record describing a state of the physical entity at a given time, as abnormal upon the normality score determined by the machine learning model being below a threshold.

In some cases, the physical models are based on physical laws and control equations associated with the physical entity.

In some cases, the physical entity is a Cyber Physical System (CPS).

In some cases, the physical entity is a vehicle.

In accordance with a third aspect of the presently disclosed subject matter, there is provided a non-transitory computer readable storage medium having computer readable program code embodied therewith, the computer readable program code, executable by processing circuitry of a computer to perform a physics-based model machine learning method, the physics-based model machine learning method comprising: obtaining, by a processing circuitry: (a) a training data-set, the training data-set comprising a plurality of training records, each training record including a collection of features describing a given allowed state of a physical entity, and (b) one or more physical models, modeling allowed physical patterns associated with the physical entity; enriching, by the processing circuitry, the training data-set by determining values of one or more unobservable features for one or more given training records of the training records, wherein the unobservable features are determined utilizing at least one of the physical models and at least one of the features of the respective given training records, giving rise to an enriched training data-set; training, by the processing circuitry, using the enriched training data-set, a machine learning model capable of receiving one or more inference records, and determining, for each of the inference records, a corresponding normality score being indicative of conformity of the respective inference record with an allowed state of the physical entity; and classifying, by the processing circuitry, using the machine learning model, an incoming record describing a state of the physical entity at a given time, as abnormal upon the normality score determined by the machine learning model being below a threshold.

## BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:

Fig. 1 is a schematic illustration of exemplary physical models, in accordance with the presently disclosed subject matter;

Fig. 2 is a block diagram schematically illustrating one example of a system for physical-model based machine learning management, in accordance with the presently disclosed subject matter;

Fig. 3 is a flowchart illustrating one example of a sequence of operations carried out for a physical-model based machine learning management process, in accordance with the presently disclosed subject matter; and

Fig. 4 is a schematic illustration of exemplary physical model of a battery, in accordance with the presently disclosed subject matter.

## DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "generating", "obtaining", "training", "classifying", "enriching", "executing" or the like, include action and/or processes of a computer that manipulate and/or transform data into other data, said data represented as physical quantities, e.g., such as electronic quantities, and/or said data representing the physical objects. The terms "computer", "processor", "processing resource", "processing circuitry" and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g. digital signal processor (DSP), a microcontroller, a field programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

The operations in accordance with the teachings herein may be performed by a computer specially constructed for the desired purposes or by a general-purpose computer specially configured for the desired purpose by a computer program stored in a non-transitory computer readable storage medium. The term "non-transitory" is used herein to exclude transitory, propagating signals, but to otherwise include any volatile or nonvolatile computer memory technology suitable to the application.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

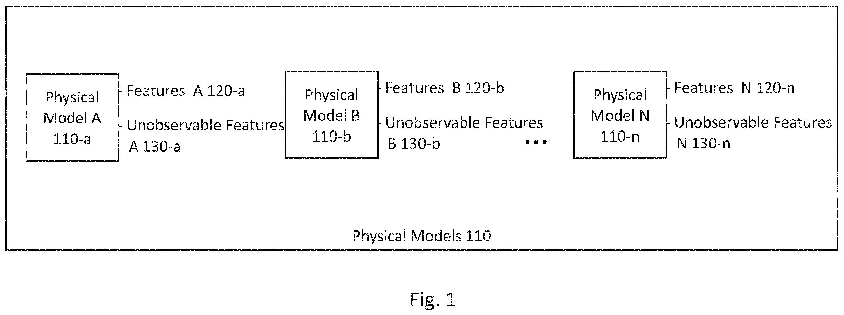

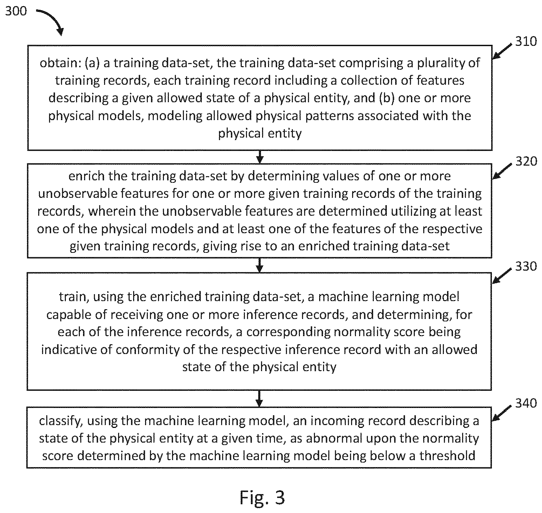

In embodiments of the presently disclosed subject matter, fewer, more and/or different stages than those shown in **Fig. 3** may be executed. In embodiments of the presently disclosed subject matter one or more stages illustrated in **Fig. 3** may be executed in a different order and/or one or more groups of stages may be executed simultaneously. **Figs. 1-2 and 4** illustrate a general schematic of the system architecture in accordance with an embodiment of the presently disclosed subject matter. Each module in **Figs. 1-2** and **4** can be made up of any combination of software, hardware and/or firmware that performs the functions as defined and explained herein. The modules in **Figs. 1-2 and 4** may be centralized in one location or dispersed over more than one location. In other embodiments of the presently disclosed subject matter, the system may comprise fewer, more, and/or different modules than those shown in **Figs. 1-2 and 4.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

Bearing this in mind, attention is drawn to **Fig. 1,** is a schematic illustration of exemplary physical models, in accordance with the presently disclosed subject matter.

Cyber-Physical Systems (CPSs) are comprised of physical and software components that are deeply intertwined. Because of CPSs heavy reliance on physical elements, CPSs are constraint by physical and electromechanical laws and by control equations. These constraints are manifested as physical models 110. Physical models 110 are systems of one or more equations that control the behavior of a given CPS. Each of the physical models 110 has one or more quantities or features (e.g., features A 120-a, features B 120-b, ..., features N 120-n). A non-limiting example of a simple physical model (e.g., one of: physical model A 110-a, physical model B 110-b, ..., physical model N 110-n) underlining a CPS that is a moving object can be depicted by the following kinematic equation:

$$\Delta x = V_0 t + \frac{a t^2}{2}$$

wherein the features (e.g., features A 120-a, features B 120-b, ..., features N 120-n) in this example are:

$\Delta x$ is the displacement of the moving object;
t is a time interval;
$V_0$ is initial velocity;
V is final velocity; and
a is constant acceleration of the object.

The value of each of the features (e.g., features A 120-a, features B 120-b, ..., features N 120-n) can change overtime. A reading of current values of the features (e.g., features A 120-a, features B 120-b, ..., features N 120-n) of one or more physical models 110 underlining the given CPS is a signal of the given CPS. Some of the features (e.g., features A 120-a, features B 120-b, ..., features N 120-n) of the physical models 110 are unobservable features (e.g., unobservable features A 130-a, unobservable features B 130-b, ..., unobservable features N 130-n) meaning that they are features that are not part of the signals read from the given CPS. These unobservable quantities or unobservable features cannot be accessed by an observer reading signals from the CPSs. Continuing our non-limiting example above, the initial velocity and the final velocity of the moving object are features (e.g., features A 120-a, features B 120-b, ..., features N 120-n) that can be observed and are part of signal read from the moving object. The acceleration of the object is an unobservable feature (e.g., unobservable features A 130-a, unobservable features B 130-b, ..., unobservable features N 130-n) that is not part of the signal read from the moving object

Machine learning models can be used to analyze and monitor the signals read from CPSs in order to achieve various tasks, and specifically for signal integrity monitoring tasks by performing anomaly detection on the signals read from the given CPS. It is to be noted that in some cases the processes taking place within the CPS can be complex processes, involving large number of signals, part of these signals are unobserved signals, hence the need for a machine learning model to successfully analyze these signals and to monitor their integrity. Such machine learning models will be more effective and accurate in analyzing and monitoring the given CPS if they can access the unobservable feature (e.g., unobservable features A 130-a, unobservable features B 130-b, ..., unobservable features N 130-n) of the underlying physical models 110 during training and during an anomaly detection process.

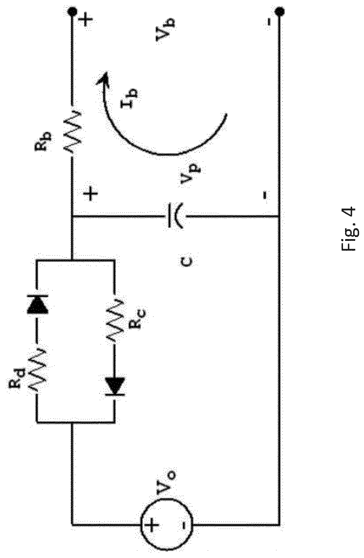

The discovery of the unobservable feature (e.g., unobservable features A 130-a, unobservable features B 130-b, ..., unobservable features N 130-n) of a corresponding CPS, to be used for example by the machine learning models, can be achieved by modeling the physical laws and control equations underlying the corresponding CPS as physical models 110 and using these models to discover the unobservable feature (e.g., unobservable features A 130-a, unobservable features B 130-b, ..., unobservable features N 130-n) by estimating their values based on the physical model. The unobservable feature (e.g., unobservable features A 130-a, unobservable features B 130-b, ..., unobservable features N 130-n) can then be used to enrich at least some of the signals read from the corresponding CPS with unobservable feature (e.g., unobservable features A 130-a, unobservable features B 130-b, ..., unobservable features N 130-n). **Fig. 4** is a schematic illustration of exemplary physical model (e.g., one of: physical model A 110-a, physical model B 110-b, ..., physical model N 110-n) of a battery, in accordance with the presently disclosed subject matter. The battery illustrated can be a lead-acid battery, for example: a Starting Lighting and Ignition (SLI) battery that is often used in vehicles. The battery itself is a CPS. A CPS can be part of a larger CPS. In this case the battery is part of the CPS which is a vehicle. Fig. 4 describes the battery using an equivalent circuit model. The physical model (e.g., one of: physical model A 110-a, physical model B 110-b, ..., physical model N 110-n) of the battery is governed by the following set of equations:

$$\dot{V}_p = -V_p \frac{1}{R_d C} + V_{oc} \frac{1}{R_d C} - I_b \frac{1}{C} \, , \, V_p \leq V_{oc}$$

$$\dot{V}_p = -V_p \frac{1}{R_c C} + V_{oc} \frac{1}{R_c C} - I_b \frac{1}{C} \, , \, V_p > V_{oc}$$

where

$$I_b = \frac{V_p - V_{oc}}{R_b}$$

Vb and Ib are the only features (e.g., features A 120-a, features B 120-b, ..., features N 120-n) of the physical model (e.g., one of: physical model A 110-a, physical model B 110-b, ..., physical model N 110-n) of the battery that are observable as part of the signal read for the battery. The $R_d$, $R_c$, C, $V_p$ and $V_{oc}$ are unobservable feature (e.g., unobservable features A 130-a, unobservable features B 130-b, ..., unobservable features N 130-n). These unobservable feature (e.g., unobservable features A 130-a, unobservable features B 130-b, ..., unobservable features N 130-n) can be estimated using the physical model (e.g., one of: physical model A 110-a, physical model B 110-b, ..., physical model N 110-n) of the battery and the data of the features (e.g., features A 120-a, features B 120-b, ..., features N 120-n) that can be read from the battery. For example, by using a filter (e.g., a Kalman filter). Once the unobservable feature (e.g., unobservable features A 130-a, unobservable features B 130-b, ..., unobservable features N 130-n) are estimated, a machine learning model (for example: used for anomaly detection of signals of the battery) can be trained to detect anomalies based on the observable Vb and Ib features (e.g., features A 120-a, features B 120-b, ..., features N 120-n), the estimated $R_d$, $R_c$, C, $V_p$ and $V_{oc}$ unobservable features (e.g., unobservable features A 130-a, unobservable features B 130-b, ..., unobservable features N 130-n) and in some cases based also on additional signals, such as: temperature of the battery, as further detailed herein, inter alia with reference to Fig. 3.

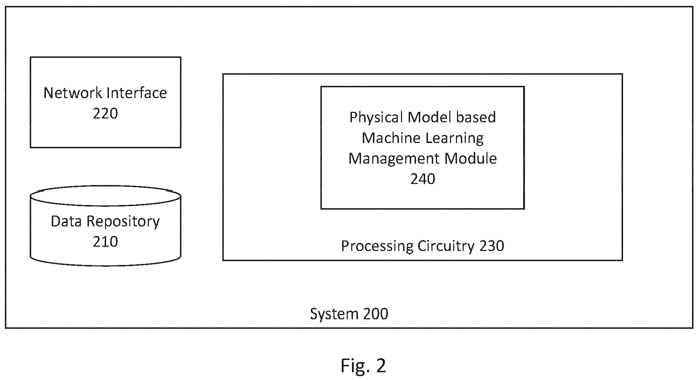

Having briefly described exemplary physical models 110, attention is drawn to Fig. 2, is a block diagram schematically illustrating one example of a system for physical-model based machine learning management, in accordance with the presently disclosed subject matter.

According to certain examples of the presently disclosed subject matter, system 200 can comprise a network interface 220 enabling connecting the system 200 to a network and enabling it to send and receive data sent thereto through the network, including in some cases receiving information such as: training data-sets, representations of physical models 110, etc. In some cases, the network interface 220 can be connected to a Local Area Network (LAN), to a Wide Area Network (WAN), or to the Internet. In some cases, the network interface 220 can connect to a wireless network. It is to be noted that in some cases the information, or part thereof, is transmitted to a target computing device.

System 200 can further comprise or be otherwise associated with a data repository 210 (e.g., a database, a storage system, a memory including Read Only Memory - ROM, Random Access Memory - RAM, or any other type of memory, etc.) configured to store data, including, inter alia, information of training data-sets, physical models 110 and their respective features (e.g., features A 120-a, features B 120-b, ..., features N 120-n) and unobservable features (e.g., unobservable features A 130-a, unobservable features B 130-b, ..., unobservable features N 130-n), machine learning models, etc.

In some cases, data repository 210 can be further configured to enable retrieval and/or update and/or deletion of the data stored thereon. It is to be noted that in some cases, data repository 210 can be distributed. It is to be noted that in some cases, data repository 210 can be stored in on cloud-based storage.

System 200 further comprises processing circuitry 230. Processing circuitry 230 can be one or more processing circuitry units (e.g., central processing units), microprocessors, microcontrollers (e.g., microcontroller units (MCUs)) or any other computing devices or modules, including multiple and/or parallel and/or distributed processing circuitry units, which are adapted to independently or cooperatively process data for controlling relevant system 200 resources and for enabling operations related to system 200 resources.

The processing circuitry 230 comprises a physical-model based machine learning management module 240, configured to perform a physical-model based machine learning management process, as further detailed herein, inter alia with reference to Fig. 3.

Turning to **Fig. 3,** a flowchart illustrating one example of a sequence of operations carried out for a physical-model based machine learning management process, in accordance with the presently disclosed subject matter.

According to certain examples of the presently disclosed subject matter, system 200 can be configured to perform a physical-model based machine learning management process 300, e.g., utilizing the physical-model based machine learning management module 240.

System 200 combines machine learning anomaly detection with physics-based system models. System 200 first fits one or more physical models 110 to observed signal data read from a CPS and estimates unobserved system parameters and states as unobservable features (e.g., unobservable features A 130-a, unobservable features B 130-b, ..., unobservable features N 130-n) used to enrich the signal data. System 200 then uses the enriched signal data to train a machine learning model, and specifically an anomaly detection pipeline (based for example on a deep learning autoencoder) usable for detecting anomalies in the recovered and observed signals and states together.

For this purpose, system 200 can be configured to obtain: (a) a training data-set, the training data-set comprising a plurality of training records, each training record including a collection of features (e.g., features A 120-a, features B 120-b, ..., features N 120-n) describing a given allowed state of a physical entity, and (b) one or more physical models 110, modeling allowed physical patterns associated with the physical entity (block 310). The physical models 110 are based on physical laws and control equations associated with the physical entity. An example of which can be seen in the physical model (e.g., one of: physical model A 110-a, physical model B 110-b, ..., physical model N 110-n) of the battery illustrated in Fig. 4. The physical entity can be a CPS, for example: a vehicle. The training data-set can be historical observed signals of one or more CPSs.

A non-limiting example of a training data-set are records of values of features (e.g., features A 120-a, features B 120-b, ..., features N 120-n) read from the battery illustrated in Fig. 4. Each record is the collection of values of the observable Vb and Ib features (e.g., features A 120-a, features B 120-b, ..., features N 120-n) as measured from the battery at a given time. A non-limiting example of the physical models 110 obtained by system 200 can be the set of equations governing the electrical-physical behavior of the battery illustrated in Fig. 4. These equations are described as following:

$$\dot{V_p} = -V_p \frac{1}{R_d C} + V_{oc} \frac{1}{R_d C} - I_b \frac{1}{C} \ , \ V_p \ \leq \ V_{oc}$$

$$\dot{V_p} = -V_p \frac{1}{R_c C} + V_{oc} \frac{1}{R_c C} - I_b \frac{1}{C} \ , \ V_p \ > \ V_{oc}$$

wherein:

$$I_b = \frac{V_p - V_{oc}}{R_b}$$

System 200 can be further configured to enrich the training data-set by determining values of one or more unobservable features (e.g., unobservable features A 130-a, unobservable features B 130-b, ..., unobservable features N 130-n) for one or more given training records of the training records, wherein the unobservable features (e.g., unobservable features A 130-a, unobservable features B 130-b, ..., unobservable features N 130-n) are determined utilizing at least one of the physical models 110 and at least one of the features (e.g., features A 120-a, features B 120-b, ..., features N 120-n) of the respective given training records, giving rise to an enriched training data-set (block 320). System 200 fits the training data-set and its features (e.g., features A 120-a, features B 120-b, ..., features N 120-n) to the physical model (e.g., one of: physical model A 110-a, physical model B 110-b, ..., physical model N 110-n) to find the corresponding unobservable features (e.g., unobservable features A 130-a, unobservable features B 130-b, ..., unobservable features N 130-n). The unobservable features (e.g., unobservable features A 130-a, unobservable features B 130-b, ..., unobservable features N 130-n) are used together with the features (e.g., features A 120-a, features B 120-b, ..., features N 120-n) to create an historical data-set enriched by the recovered values of the unobservable features (e.g., unobservable features A 130-a, unobservable features B 130-b, ..., unobservable features N 130-n). The enriched historical data-set can be used as an enriched training data-set for training a machine learning module. Continuing our non-limiting example above of a battery CPS, system 200 can determine the $R_d$, $R_c$, C, $V_p$ and $V_{oc}$ unobservable features (e.g., unobservable features A 130-a, unobservable features B 130-b, ..., unobservable features N 130-n) based on the observable Vb and $I_b$ features (e.g., features A 120-a, features B 120-b, ..., features N 120-n) of the training data-set and on the battery physical model. In some cases, the training data-set includes also additional features (other than the features and the unobservable features), relevant to the physical model (e.g., one of: physical model A 110-a, physical model B 110-b, ..., physical model N 110-n), such as: a temperature of the battery.

After enriching the training data-set, system 200 is further configured train, using the enriched training data-set, a machine learning model capable of receiving one or more inference records, and determining, for each of the inference records, a corresponding normality score being indicative of conformity of the respective inference record with an allowed state of the physical entity (block 330). System 200 can use the enriched training data-set, for example, for performing unsupervised training of a machine learning pipeline for anomaly detection. Continuing our non-limiting example above, once the unobservable feature (e.g., unobservable features A 130-a, unobservable features B 130-b, ..., unobservable features N 130-n) are estimated, a machine learning model (for example: used for anomaly detection of signals of the battery) can be trained to detect anomalies based on the observable Vb and Ib features (e.g., features A 120-a, features B 120-b, ..., features N 120-n), the estimated $R_d$, $R_c$, C, $V_p$ and $V_{oc}$ unobservable features (e.g., unobservable features A 130-a, unobservable features B 130-b, ..., unobservable features N 130-n) and in some cases based also on additional features, such as: temperature of the battery, etc.

System 200 can now classify, using the machine learning model, an incoming record describing a state of the physical entity at a given time, as abnormal upon the normality score determined by the machine learning model being below a threshold (block 340). System 200 now receives run-time signals from the CPS. These signals are used for real-time model parameter estimations for providing the features (e.g., features A 120-a, features B 120-b, ..., features N 120-n), the unobservable features (e.g., unobservable features A 130-a, unobservable features B 130-b, ..., unobservable features N 130-n) and in some cases, additional features. These are fed into the trained machine learning module to produce an anomaly score.

Continuing our non-limiting example above, the machine learning module used to monitor signals of the battery for anomaly detection can be fed in real-time with signals from the battery, including the observable Vb and Ib features (e.g., features A 120-a, features B 120-b, ..., features N 120-n), the estimated $R_d$, $R_c$, C, $V_p$ and $V_{oc}$ unobservable features (e.g., unobservable features A 130-a, unobservable features B 130-b, ..., unobservable features N 130-n) and in some cases based also on additional features, such as: temperature of the battery, etc. in order to determine a normality score for at least some of the real-time signals read from the battery. In cases that the normality score is below a threshold, system 200 classifies the state of the battery as abnormal.

It is to be noted that, with reference to Fig. 3, some of the blocks can be integrated into a consolidated block or can be broken down to a few blocks and/or other blocks may be added. Furthermore, in some cases, the blocks can be performed in a different order than described herein. It is to be further noted that some of the blocks are optional (for example, block 320 can be an optional block). It should be also noted that whilst the flow diagram is described also with reference to the system elements that realizes them, this is by no means binding, and the blocks can be performed by elements other than those described herein.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the present presently disclosed subject matter.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

**Claims**

1. A physics-based model machine learning system, the physics-based model machine learning system comprising a processing circuitry configured to:

   obtain: (a) a training data-set, the training data-set comprising a plurality of training records, each training record including a collection of features describing a given allowed state of a physical entity, and (b) one or more physical models, modeling allowed physical patterns associated with the physical entity;
   enrich the training data-set by determining values of one or more unobservable features for one or more given training records of the training records, wherein the unobservable features are determined utilizing at least one of the physical models and at least one of the features of the respective given training records, giving rise to an enriched training data-set;
   train, using the enriched training data-set, a machine learning model capable of receiving one or more inference records, and determining, for each of the inference records, a corresponding normality score being indicative of conformity of the respective inference record with an allowed state of the physical entity; and
   classify, using the machine learning model, an incoming record describing a state of the physical entity at a given time, as abnormal upon the normality score determined by the machine learning model being below a threshold.

2. The physics-based model machine learning system of claim 1, wherein the physical models are based on physical laws and control equations associated with the physical entity.

3. The physics-based model machine learning system of claim 1, wherein the physical entity is a Cyber Physical System (CPS).

4. The physics-based model machine learning system of claim 1, wherein the physical entity is a vehicle.

5. A physics-based model machine learning method, the physics-based model machine learning method comprising:

   obtaining, by a processing circuitry: (a) a training data-set, the training data-set comprising a plurality of training records, each training record including a collection of features describing a given allowed state of a physical entity, and (b) one or more physical models, modeling allowed physical patterns associated with the physical entity;
   enriching, by the processing circuitry, the training data-set by determining values of one or more unobservable features for one or more given training records of the training records, wherein the unobservable features are determined utilizing at least one of the physical models and at least one of the features of the respective given training records, giving rise to an enriched training data-set;

training, by the processing circuitry, using the enriched training data-set, a machine learning model capable of receiving one or more inference records, and determining, for each of the inference records, a corresponding normality score being indicative of conformity of the respective inference record with an allowed state of the physical entity; and

classifying, by the processing circuitry, using the machine learning model, an incoming record describing a state of the physical entity at a given time, as abnormal upon the normality score determined by the machine learning model being below a threshold.

6. The physics-based model machine learning method of claim 5, wherein the physical models are based on physical laws and control equations associated with the physical entity.

7. The physics-based model machine learning method of claim 5, wherein the physical entity is a Cyber Physical System (CPS).

8. The physics-based model machine learning method of claim 5, wherein the physical entity is a vehicle.

9. A non-transitory computer readable storage medium having computer readable program code embodied therewith, the computer readable program code, executable by processing circuitry of a computer to perform a physics-based model machine learning method, the physics-based model machine learning method comprising:

obtaining, by a processing circuitry: (a) a training data-set, the training data-set comprising a plurality of training records, each training record including a collection of features describing a given allowed state of a physical entity, and (b) one or more physical models, modeling allowed physical patterns associated with the physical entity;

enriching, by the processing circuitry, the training data-set by determining values of one or more unobservable features for one or more given training records of the training records, wherein the unobservable features are determined utilizing at least one of the physical models and at least one of the features of the respective given training records, giving rise to an enriched training data-set;

training, by the processing circuitry, using the enriched training data-set, a machine learning model capable of receiving one or more inference records, and determining, for each of the inference records, a corresponding normality score being indicative of conformity of the respective inference record with an allowed state of the physical entity; and

classifying, by the processing circuitry, using the machine learning model, an incoming record describing a state of the physical entity at a given time, as abnormal upon the normality score determined by the machine learning model being below a threshold.

Fig. 1

Fig. 2

300

```
┌─────────────────────────────────────────────────────────────┐  ╱ 310
│ obtain: (a) a training data-set, the training data-set       │
│ comprising a plurality of training records, each training    │
│ record including a collection of features describing a given │
│ allowed state of a physical entity, and (b) one or more      │
│ physical models, modeling allowed physical patterns          │
│ associated with the physical entity                          │
└─────────────────────────────────────────────────────────────┘
                              ↓
┌─────────────────────────────────────────────────────────────┐  ╱ 320
│ enrich the training data-set by determining values of one or │
│ more unobservable features for one or more given training    │
│ records of the training records, wherein the unobservable    │
│ features are determined utilizing at least one of the        │
│ physical models and at least one of the features of the      │
│ respective given training records, giving rise to an         │
│ enriched training data-set                                   │
└─────────────────────────────────────────────────────────────┘
                              ↓
┌─────────────────────────────────────────────────────────────┐  ╱ 330
│ train, using the enriched training data-set, a machine       │
│ learning model capable of receiving one or more inference    │
│ records, and determining, for each of the inference records, │
│ a corresponding normality score being indicative of          │
│ conformity of the respective inference record with an        │
│ allowed state of the physical entity                         │
└─────────────────────────────────────────────────────────────┘
                              ↓
┌─────────────────────────────────────────────────────────────┐  ╱ 340
│ classify, using the machine learning model, an incoming      │
│ record describing a state of the physical entity at a given  │
│ time, as abnormal upon the normality score determined by     │
│ the machine learning model being below a threshold           │
└─────────────────────────────────────────────────────────────┘
```

Fig. 3

Fig. 4

Europäisches
Patentamt

European
Patent Office

Office européen
des brevets

# EUROPEAN SEARCH REPORT

**Application Number**

EP 22 17 5876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/293032 A1 (WANG HONGGANG [US] ET AL) 17 September 2020 (2020-09-17) * paragraph [0029] - paragraph [0030] * * paragraph [0044] - paragraph [0047]; figure 2 * * paragraph [0052] - paragraph [0057] * ----- | 1-9 | INV. G06N20/00 G06F30/27 |

**TECHNICAL FIELDS SEARCHED (IPC)**

G06N
G06F

The present search report has been drawn up for all claims

| Place of search | Date of completion of the search | Examiner |
|---|---|---|
| Munich | 16 November 2022 | Ross, Christopher |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 5876

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2022

| Patent document cited in search report | Publication date | Patent family member(s) | Publication date |
|---|---|---|---|
| US 2020293032 A1 | 17-09-2020 | US 2020292608 A1<br>US 2020293032 A1<br>US 2020293033 A1 | 17-09-2020<br>17-09-2020<br>17-09-2020 |

For more details about this annex : see Official Journal of the European Patent Office, No. 12/82

EPO FORM P0459